# EUROPEAN PATENT SPECIFICATION

(11) **EP 1 128 674 B1**
(45) Date of publication and mention of the grant of the patent: **31.12.2008**
(21) Application number: 99954407.5
(22) Date of filing: 05.11.1999
(51) Int. Cl.: H04N 7/16, H04N 5/445

(54) **RECEIVING TERMINAL, METHOD FOR CONTROLLING THE SAME, AND RECORDED MEDIUM ON WHICH PROGRAM IS RECORDED**
EMPFANGSENDGERÄT, KONTROLLVERFAHREN UND AUFZEICHNUNGSMEDIUM
TERMINAL DE RECEPTION, PROCEDE DE COMMANDE DE CE DERNIER ET SUPPORT D'ENREGISTREMENT DE PROGRAMMES

(30) Priority: 05.11.1998 JP 31424598
(43) Date of publication of application: 29.08.2001
(73) Proprietor: TOKYO BROADCASTING SYSTEM INC., Tokyo107-8006 (JP)
(72) Inventor: HARADA, Satoshi, Tokyo Broadcasting System, Inc., Minato-ku, Tokyo 107-8006 (JP)
(74) Representative: Grünecker, Kinkeldey, Stockmair & Schwanhäusser Anwaltssozietät
(86) International application number: PCT/JP1999/006177
(87) International publication number: WO 2000/028737

(56) References cited:
- EP-A- 0 763 942
- EP-A1- 0 749 081
- WO-A-90/10988
- WO-A-93/19427
- JP-A- 8 149 426
- JP-A- 9 135 438
- JP-A- 9 205 635

## Description

### TECHNICAL FIELD

The present invention relates to technology for a reception terminal device in a digital broadcasting service. More specifically, it relates to technology for a reception terminal device whereby broadcasting of video and audio, and data broadcasting, can be viewed, in a digital broadcast service.

### BACKGROUND ART

Recent years have seen the arrival of terrestrial data broadcasting wherein the intervals in terrestrial wave television broadcasts are used as a new broadcasting mode for increasing the diversity,of information delivery. In data broadcasting, similarly to normal video and audio information (conventional television broadcasting), data is distributed to a user terminal, thereby providing a variety of services on the basis of this data. A shopping service is one example of a service provided using data broadcasting.

In a shopping service of this kind, a user selects a desired shopping service from a menu shown on a data broadcast screen, by operating a manual remote control device. The user is able to select a desired item from the selected shopping service and place an order for that item.

Furthermore, there have also been proposed programme associated type shopping services, wherein data broadcast screens based on data broadcasting are associated with shopping programme screens based on normal television broadcasting. In a programme associated shopping service of this kind, an item information list relating to the programme screen is displayed on the data broadcast screen, and if there is item information that the user wishes to see, then he or she can cause this to be displayed, and place an order for same, by operating the remote control, or the like.

In a conventional programme associated shopping service as described above, the user is only able to look at the item information and place an order whilst the related item information list is displayed as associated with the programme screen. Consequently, in cases where the desired item information list does not come to be displayed as the programme screens progress, it is not possible to view the item information, and this is inconvenient for the user.

On the other hand, it would be convenient, if it were also possible to view item information transmitted in normal programmes, such as films, dramas, or the like, rather than assigning shopping to a specific programme, whereby, consequently, the user would be able to order directly any product that takes his or his interest. However, in conventional data broadcasting systems, it is necessary to display an item information list on the programme screen, and hence not only does this impair the view of the programme, but it also requires balancing of interests between programme sponsors, and hence it has been difficult to implement in practice.

### DISCLOSURE OF THE INVENTION

The present invention is a reception terminal device which is capable of identifying a product projected onto a screen during programme broadcasting, and indicating item information for that item at a desired time after programme broadcasting has terminated.

In accordance with the present invention, the foregoing objectives are realised as defined in the independent claims. Preferred embodiments are defined in the dependent claims.

According to the invention, it is possible to provide a reception terminal device which identifies an object image projected on a screen during programme broadcasting, and is able to display product information for that object image at a desired time after the end of programme broadcasting. Thereby, it is possible to provide a new television viewing mode.

### BRIEF DESCRIPION OF THE DRAWINGS

Fig. 1 is a diagram showing a system composition of the broadcast operator's side relating to the present invention;
Fig. 2 is a diagram for illustrating an example of the composition of a reception terminal system relating to the present invention;
Fig. 3 is a functional block diagram showing the composition of a reception terminal device relating to the present invention;
Fig. 4 is a functional block diagram showing the composition of a stream receiving section;
Fig. 5 is a block diagram showing the composition of a timing information management section;
Fig. 6 is a diagram showing one example of comparative data stored in a data broadcasting data storing section;
Fig. 7 is a block diagram showing the composition of a data broadcast control section;
Fig. 8 is a diagram for describing the operational processing of a reception terminal device with respect to video and audio data;
Fig. 9 is a diagram for describing the operational processing of a reception terminal device for data used for data broadcasting;
Fig. 10 is a diagram for describing the operational processing of a reception terminal device with respect to operations performed by a user;
Fig. 11 is a diagram for describing the operational processing of a reception terminal device with respect to operations performed by a user;
Fig. 12 is a diagram for describing the operational processing of a reception terminal device with respect to operations performed by a user;
Fig. 13 is a diagram for describing an example of an application of a reception terminal device relating to a first embodiment;
Fig. 14 is a diagram for describing user operations;
Fig. 15 is a diagram showing one example of a display on a monitor screen relating to a first embodiment;
Fig. 16 is a diagram showing one example of a display on a monitor screen relating to a first embodiment;
Fig. 17 is a diagram for describing the operational processing of a reception terminal device relating to a second embodiment; and
Fig. 18 is a diagram for describing an operational example used in a reception terminal device relating to a third embodiment.

### DETAILED DESCRIPTION OF THE PREFERRED EMBODIMENTS

Next, embodiments of the present invention are described with reference to the drawings.

The embodiments of the present invention are based on the premise of a digital broadcasting service. Specifically, in a digital broadcasting service, television broadcasting is achieved by distributing digital data bit sequence (stream) comprising encoded video signals and audio signals to users (viewers), via a transmission medium, these signals being received and decoded by a reception terminal device and output in the form of video images and sounds. Furthermore, data broadcasting is achieved by distributing various types of display data and scenario data in the form of a stream, this data being processed by the reception terminal device. Know techniques for achieving a digital broadcasting service of this kind include: MPEG2 (Moving Picture Coding Experts Group 2 / Moving Picture Experts Group 2), DSM-CC (Digital Storage Media Command and Control), MHEG (Multimedia and Hypermedia Information Coding Experts Group), BML (Broadcast Markup Language), B-XML (Broadcast), and the like. These techniques are described as examples in the present embodiments.

Below, the present invention is described with reference to functional block diagrams constituted by function realising means which represent the present invention in appropriate functional terms. These functional realising means can be achieved by hardware logic circuits and software programs which are equivalent thereto in functional terms.

### (First embodiment)

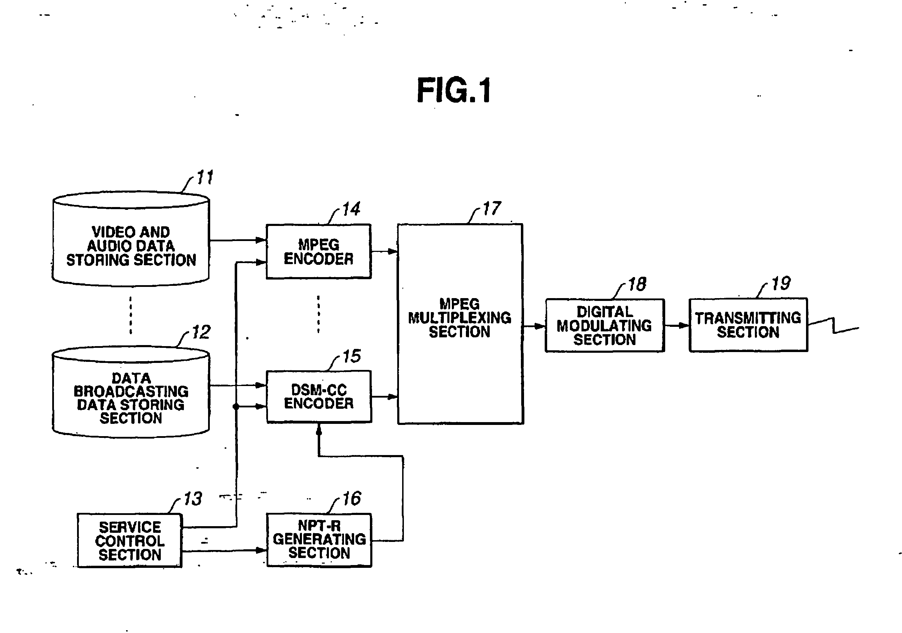

Fig. 1 is a diagram showing a system composition on the side of the broadcast operator relating to the present invention. In this diagram, a video and audio data storing section 11 records video data and audio data for programmes by means of standard television broadcasting. In this specification, the video data and audio data is treated as a single video image and sound data item. A data broadcasting data storing section 12 records data for data broadcasting (data broadcasting data). This data broadcasting data is constituted by text data, still image data, audio (or sound) data, programs (scenario data) for controlling the reception terminal device, and display object data forming screens. The scenario data records, for example, the display configuration and operational mode by means of MHEG, or the like. In the present embodiment, comparative information (described hereinafter) and information relating to object images (object image information) are delivered to the user in the form of data broadcasting data.

Normal television broadcasting means broadcasting constituted by video and audio. Furthermore, data broadcasting means broadcasting other than the aforementioned television broadcasting, and hence it is mainly constituted by text, still images, sounds, and the like. The programmes based on normal television broadcasting are called main programmes, and the programmes based on data broadcasting associated with these main programmes are called associated data broadcast programmes.

A service control section 13 controls an MPEG encoder 14 and DSM-CC (Digital Storage Media - Command and Control) encoder 15, in order that the broadcast is distributed according to a previously determined broadcast service schedule. Furthermore, the service control section 13 also transmits the broadcast service schedule to a timing reference information generating section 16, and this normal play time reference information generating section (hereinafter, called "NPT-R generating section") 16 creates normal play time reference information (NPT-R; Normal Play Time-Reference) on the basis of the transmitted broadcast service schedule, and outputs this information to the DSM-CC encoder 15.

Under the control of the service control section 13, the MPEG encoder-14 reads out and encodes video and audio data from the video and audio data storing section 11, and transmits this data to an MPEG multiplexing section 17.

Under the control of the service control section 13, the DSM-CC encoder 15 reads out data broadcasting data from the data broadcasting data storing section 12, encodes this data together with the normal play time reference information NPT-R transmitted by the NPT-R generating section 16, and sends same to the MPEG multiplexing section 17.

The MPEG multiplexing section 17 multiplexes the encoded video and audio data (video and audio stream) with the data broadcasting data (data broadcasting stream), to generate a single transmission stream, When performing multiplexing, the MPEG multiplexing section 17 superimposes timing standard reference information PCR (Program Clock Reference) and descriptors, as necessary. The MPEG multiplexing section 17 transmits the multiplexed transmission stream to a digital modulating section 15.

The digital modulating section 18 then digitally modulates the multiplexed stream according to a prescribed modulation method, and transmits same to a transmitting section 19. Examples of the prescribed modulation method include an 8-PSK method or OFDM method, or the like. The transmitting section 19 sends the digitally modulated stream to a broadcast satellite.

The description of the present embodiment refers to satellite broadcasting, but the invention is not limited to this, and terrestrial wave broadcasting, communication-based broadcasting, and cable broadcasting, or the like, may also be employed.

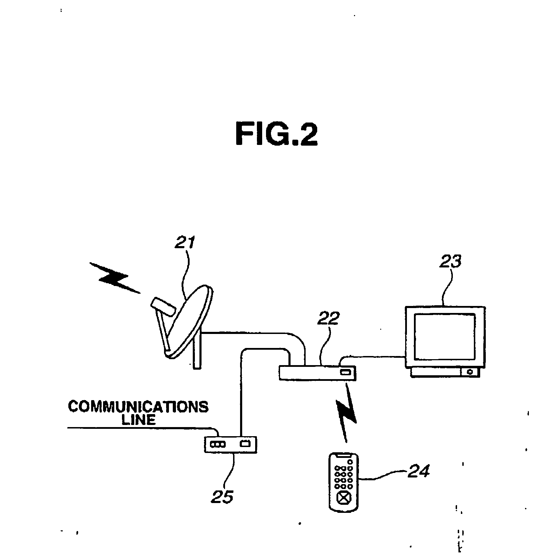

Fig. 2 is a diagram showing an example of the composition of a reception terminal system relating to the present embodiment. This reception terminal system comprises: an antenna 21 for receiving electromagnetic waves (transmission stream) sent from the transmitting section 19 illustrated in Fig. 1 via a broadcast satellite; a reception terminal device 22 for selecting and decoding the received stream; an output device 23 for outputting video images and sounds on the basis of the decoded video and audio data; a remote controller 24 operated by the user with respect to the reception terminal device 22 or the output device 23; and a modem 25 for performing communications by means of a telephone circuit.

The reception terminal system illustrated in this diagram is constituted by an individual reception terminal device 22, output device 23 and modem 25, but it is also possible to constitute same as a single integrated reception terminal device, as appropriate. The remote controller 24 comprises, for example, a power on/off button, channel selection buttons, and the like, the operational receiving section of the reception terminal device 22 receiving infrared signals corresponding to the buttons pressed by the user. Moreover, instead of using a remote controller 24, the operating panel may be formed on the front section of the device, or the like.

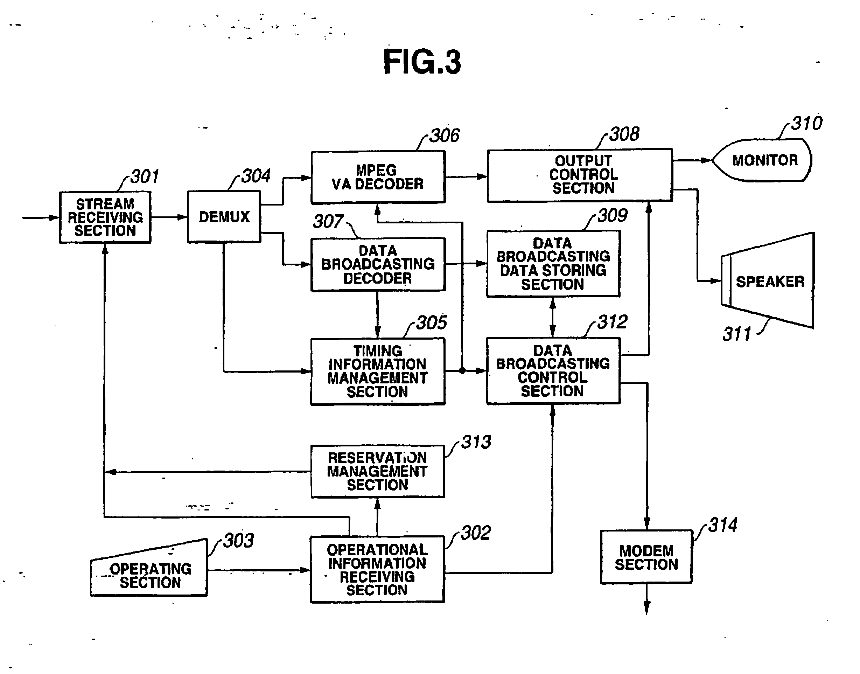

Fig. 3 is a functional block diagram showing the composition of a reception terminal device relating to the present embodiment. In this diagram, a stream receiving section 301 selects a stream corresponding to the desired broadcast channel from the streams supplied via the antenna 21, demodulates same, and transmits the demodulated stream to a DEMUX (Demultiplexer) 304. The stream corresponding to the prescribed broadcast channel is selected in accordance with the channel selection made by the user from the operating section 303 and via the operating information receiving section 302.

The DEMUX 304 isolates and extracts the timing standard reference information PCR, the video and audio stream, the normal play time reference information NPT-R and the data broadcasting stream , from the selected stream. The DEMUX 304 then sends the timing standard reference information PCR to a time period information management section 305, whilst also sending the video and audio stream and the data broadcasting stream to a video/audio decoder (hereinafter, called "VA decoder") 306 and a data broadcast decoder 307, respectively.

The time period information management section 305 adjusts the generated standard timing information STC, as necessary, by means of the timing standard reference information PCR, and also manages the time period information for the reproduced video and audio,stream.

The MPEG-VA decoder 306 decodes the extracted video and audio stream in accordance with the standard timing information STC sent by the time period information management, and transmits same to an output control section 308.

The data broadcast decoder 307 extracts normal play time reference information NPT-R from the transmitted data broadcasting stream , and sends same to the time period information managing section 305. Furthermore, the data broadcast decoder 307 also sends the transmitted data broadcasting stream to the data broadcasting data storing section 309. The data broadcasting data storing section 309 temporarily stores the data broadcasting data transmitted by the data broadcasting decoder 307.

The output control section 308 controls a monitor 310 and speaker 311 on the basis of the output video and audio data. The output control section 308 also controls the monitor 310 and speaker 311 on the basis of the data broadcasting data sent by the data broadcasting control section 312.

The data broadcasting data storing section 309 stores comparative information, object image information, MHEG data (scenario data) for controlling the reception terminal device and display object data for icons, and the like, transmitted in the form of a data broadcasting stream . Comparative information refers to data which relates an object image displayed on the monitor 310 screen on the basis of main programme broadcasting, with information (display timing information) relating to the timing at which that object image is to be displayed, and it also includes a pointer to an object image information file for said object image. In the present embodiment, the comparative information is sent prior to the start of main programme broadcasting. Furthermore, the object image information is transmitted in parallel with the main programme broadcast, by a carousel method.

The data broadcasting control section 312 reads out required data broadcasting data from the data broadcasting data storing section 309 and transmits same to the output control section 308 such that it may be output by means of the monitor 310 and speaker 311. The data broadcasting control section 312 is controlled in accordance with the scenario data specified on the broadcast operator side and transmitted as a data broadcasting stream, and the operating instructions input by the user via the operating section 303. In the present embodiment, the data broadcasting control section 312 identifies an object image displayed on the screen of the monitor 310 in accordance with an object image identification command from the operating section 303, and furthermore, it sends object image information for the object image identified in accordance with the object image identification command from the operating section 303, to the output control section 308, in such a manner that it is output as a data broadcast screen (this output also includes sound output; same applies hereinafter.)

A reservation management section 313 manages the broadcast start time of a main programme for which a playback reservation has been made by means of the user operating the operating section 303, and the broadcast start time of data broadcasting associated with that programme (hereinafter, called "associated data broadcasting"), as reservation information. When the start time for the associated data broadcasting relating to the reserved main programme is reached, the reservation management section 315 controls the stream receiving section 301 in such manner that it receives the corresponding data broadcasting stream .

The modem section 314 is connected to a communications circuit, such as a telephone circuit, or the like, and performs data communications with a server provided by a service operator, or the like. For example, if the user inputs prescribed requirements with respect to the data broadcasting screen displayed on the monitor 310, thereby placing an order, then the modem 314 will transmits that order information to the server.

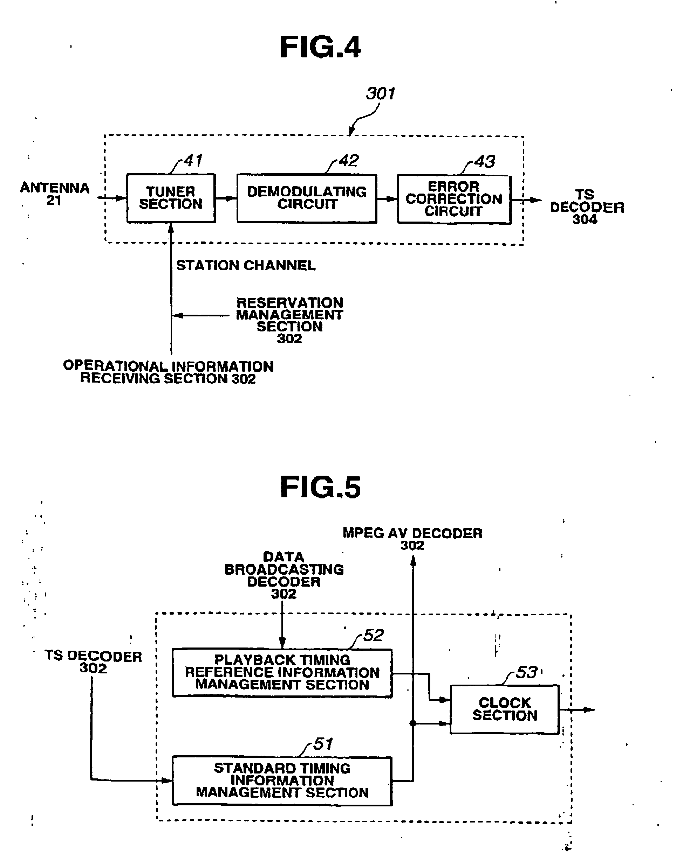

Next, the various sections of the reception terminal device will be described in detail. Fig. 4 is a diagram showing the composition of a stream receiving section 301. In this diagram, the stream receiving section 301 is constituted by a tuner 41, demodulating circuit 42 and error correction circuit 43. The tuner 41 selects a stream corresponding to the channel chosen by the user from the streams via the antenna 21, and sends this stream to the demodulating circuit 42. The demodulating circuit 42 demodulates the transmitted stream by using a prescribed method, and sends same to an error correction circuit 43. The error correction circuit 43 checks whether or not there are errors in the demodulated stream, and if an error is detected, it performs error correction, or the like.

Fig. 5 is a block diagram showing the composition of a timing information management section 305. The timing information management section 305 is constituted by a standard timing information management section 51, a play timing information management section 52, and a clock section 53.

The standard timing information management section 51 adjusts the standard timing information STC on the basis of the timing standard reference information PCR sent by the DEMUX 304. The corrected standard timing information STC manages the time period information for the reproduced video and audio stream.

The play timing information management section 52 stores the normal play time reference information NPT-R sent by the data broadcasting stream. The normal play time reference information NPT-R indicates, for example, the standard timing information STC or a desired position for the broadcast start position of the main programme.

The clock section 53 measures the broadcast time period of the main programme. In other words, the clock section 53 calculates a position (normal play time NPT) on the time axis of the video/audio stream being broadcast (reproduced), on the basis of the current standard timing information STC sent from the standard timing information management section 51 and the normal play time reference information NPT-R held in the play timing information management section 52.

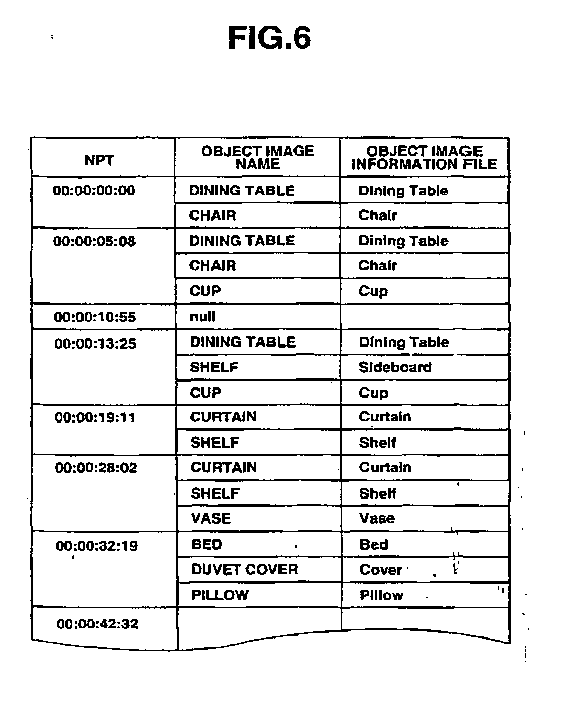

Fig. 6 is a diagram showing one example of comparative information stored in a data broadcasting data storing section 309. As shown in the diagram, the comparative information is constituted by "NPT (display timing information)", "object image name" and "pointer to object image information". "NPT" indicates the period of time for which the object image specified by "object image name" is displayed during the main programme, in terms of the time period having elapsed since the start of the programme broadcast. For example, in the case of a dining table, it indicates a period from "00:00:00:00" immediately after the start of broadcasting, to "00:00:10:54", and from "00:00:13:25" to "00:00:19:11", whilst in the case of a curtain, it indicates a period from "00:00:19:11" to "00:00:32:19". The data "pointer to object image information" indicates the file name where object image information is stored. The object image information is detailed data relating to the object displayed in the image. For example, in the case of a dining table, it relates to information, such as the size, weight, accessories, manufacturer's name, external appearance (photograph), or the like, which is generally required by the user when deciding whether or not to purchase the object image.

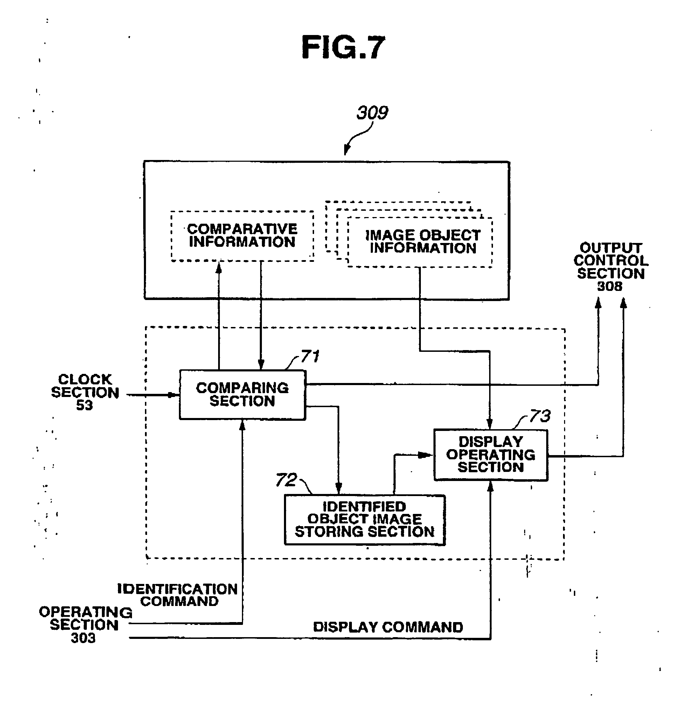

Fig. 7 is a functional block diagram showing the composition of a data broadcast control section 312. In this diagram, the data broadcast control section 312 is constituted by a comparing section 71, an identified object image storing section 72, and a display operating section 73.

When an object image identification command is sent by the operating section 303, the comparing section 71 reads in the current normal play time NPT as command timing information, by referencing the clock section 53, searches for comparative information stored in the data broadcasting data storing section 309, on the basis of this command timing information, and identifies the object image displayed on the monitor 310 at the point in time that the identification command was sent. The comparing section 71 compares the NPT (display timing information) in the comparative information with the command timing information, reads out the object image corresponding to the display timing information indicated by this command timing information, and the object image information file for that object image, and sends same to the identified object image storing section 72. When an object image has been identified, the comparing section 71 outputs relevant display data to the control section 308 in such a manner that a symbol indicating that there is an identified object image will be displayed on the screen of the monitor 310.

For example, let it be supposed that an object image identification command is input from the operating section 303 due to operations performed by the user, and that the comparing section 71, upon referencing the clock section 53, acquires the time "00:00:07:43" as a normal play time NPT value. The comparing section 71 checks the "display timing information," in the comparative information, reads out the dining table and the associated file name "Dining Table", the chair and "Chair" and the cup and "Cup", which are contained in the second display timing information element at "00:00:05:08", and stores same in the identified object image storing section 72. The comparing section 71 then transmits a symbol (display data) for each of the read-out object images, to the output control section 308, in order to inform the user that there are identified objects.

When a command to display the identified object image is sent by the operating section 303, the display operating section 72 reads out the object image stored in the identified object image storing section 72, and the object image information indicated in the file associated therewith, and sends same to the output control section 308. The object image information sent to the output control section 308 is displayed on the screen of the monitor 310.

Next, the operational processing performed by the reception terminal device relating to the present embodiment constituted as described above will be described.

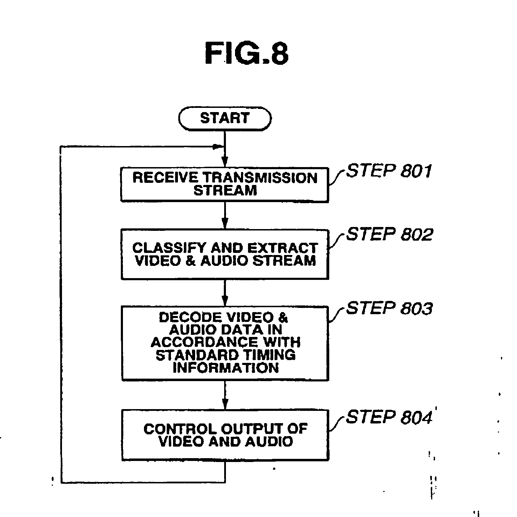

Fig. 8 is a diagram for describing the operational processing implemented by a reception terminal device with respect to video and audio data. As illustrated in this diagram, upon receiving data streams, the reception terminal device first selects the stream of the channel chosen by the user, and then performs demodulation, and the like, thereof (STEP 801). The reception terminal device then extracts a video and audio stream from the stream which has undergone demodulation, and the like (STEP 802). Thereupon, the reception terminal device decodes the video and audio stream in accordance with the standard timing information STC (STEP 803). The reception terminal device outputs video and audio based on the decoded video and audio stream, via the monitor 310 and speaker 311 (STEP 804).

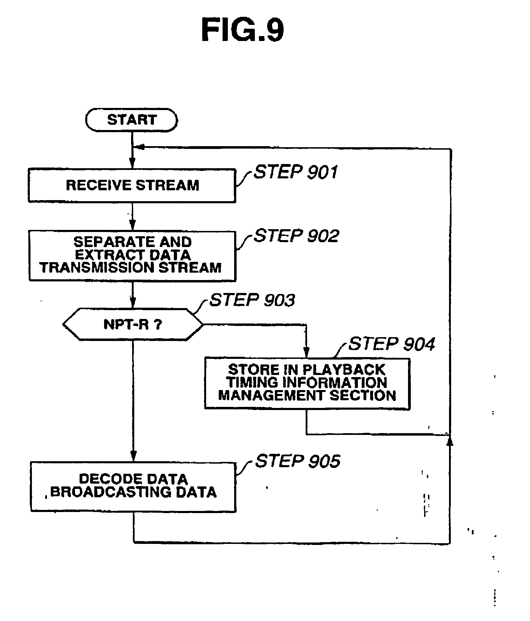

Fig. 9 is a diagram for describing the operational processing implemented by the reception terminal device with respect to data broadcasting data. As shown in this diagram, upon receiving data streams (STEP 901), the reception terminal device isolates and extracts the data broadcasting stream (STEP 902). The reception terminal device then decodes the extracted data broadcasting stream and if it contains normal play time reference information NPT-R, then it also extracts this information and stores same in the play timing information management section 52 (STEP 903 and 904). On the other hand, data broadcasting data, other than NPT-R is stored in the data broadcasting data storing section 309.

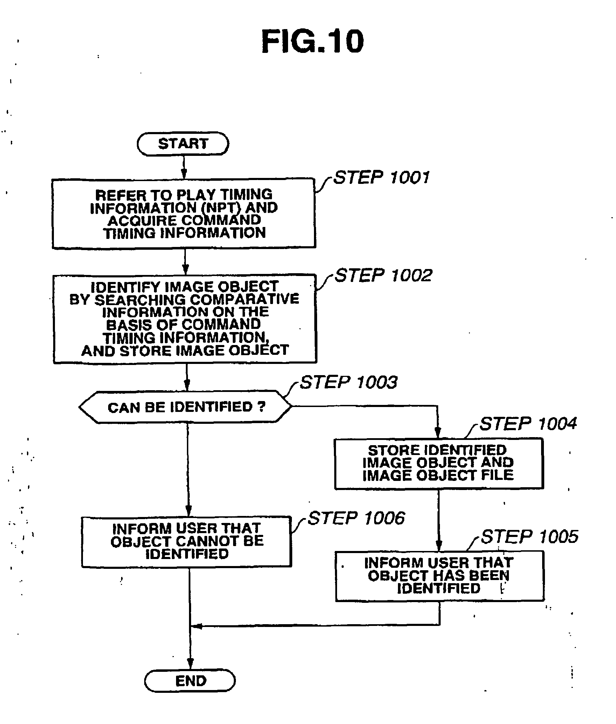

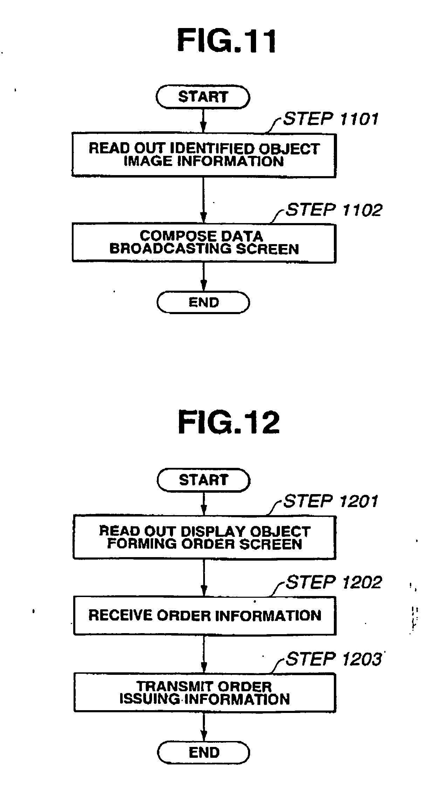

Fig. 10 to Fig. 12 are diagrams for describing the operational processing of the reception terminal device with respect to user controls. More specifically, Fig. 10 illustrates operational processing of the reception, terminal device with respect to an identification command for a displayed object image, Fig. 11 illustrates operational processing of the reception terminal device with respect to a display command for an identified object image, and Fig. 12 illustrates operational processing of the reception terminal device with respect to a command for placing an order.

If the reception terminal device receives an identification command from the operating section 303 during main programme broadcasting, then as illustrated in Fig. 10, it references the play timing information (current NTP) indicated by the clock section 53 and acquires this information as command timing information (STEP 1001). Thereupon, the reception terminal device searches for comparative information stored in the data broadcasting data storing section 309, on the basis of the acquired command timing information, and thereby identifies the object image. Identification of the object image is performed by means of the comparing section 71 comparing the command timing information with the display timing information indicated in the comparative information (STEP 1002). When the object image has been identified by the comparing section 71, the reception terminal device temporarily stores the identified object image in the identified object storing section 72 (STEP 1004, 1005), and in order to inform the user that the object has been identified, it sends display data to the output control section 308 in such a manner that a prescribed symbol is displayed on the monitor 310. On the other hand, if the object cannot be identified, then a notification to this effect is conveyed to the user, by performing output control to achieve a beep sound, or the like (STEP 1006) .

If the reception terminal device receives a display command from the operating section 303, during main programme broadcasting or after main programme broadcasting has terminated, the object image information for the object image as stored in the identified object image storing section 72 is read out sequentially (STEP 1101). The reception terminal device then composes a data broadcasting screen from the read out object image information by means of a required display object, and transmits same to an output control section 308 (STEP 1102). Thereby, a data broadcasting screen is displayed on the monitor 310.

Upon receiving a command relating to an order from the operating section 303, the reception terminal device reads out the display object forming the order screen, by means of the data broadcasting control section 312, and displays it similarly on the monitor 310 (STEP 1201), whereupon the reception terminal device receives input of required items for the order, from the operating section 303 (STEP 1202). When an order command is received from the operating section 303, the order information, including items input via a communications circuit, is transmitted to the server (STEP 1202).

Next, a description is given of controls performed with respect to the reception terminal device relating to the present embodiment, along with an example of the operational processing performed by same.

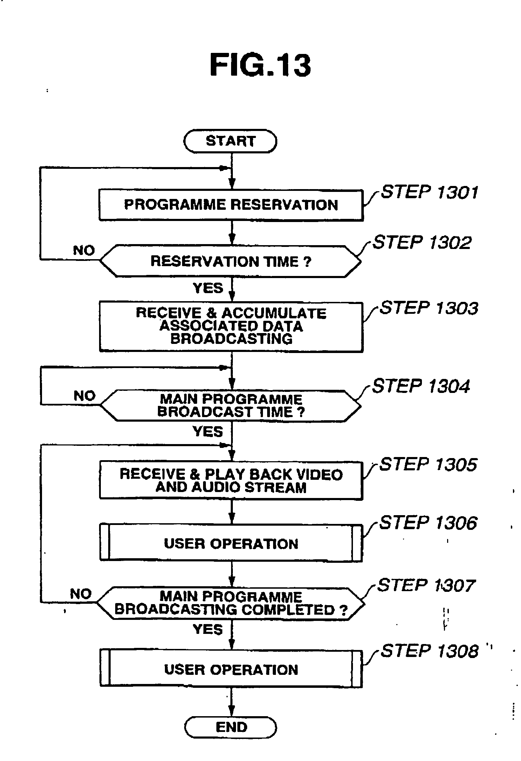

Fig. 13 is a diagram for describing an example of application of the reception terminal device relating to the present embodiment. As shown in the diagram, the user refers to the programme columns of an electronic programme guide, or the like, and makes a main programme reservation according to the controls performed by the user (STEP 1301). By means of this programme reservation, if there is an associated data broadcast, then the broadcast start timing for the main programme broadcast and the broadcast start timing for the associated data broadcast programme are managed as reservation information. When the broadcast start time for the associated data broadcast of the programme reserved by the user has been reached, the processes of receiving and accumulating the associated data , broadcasting stream is initiated (STEP 1302, 1303).

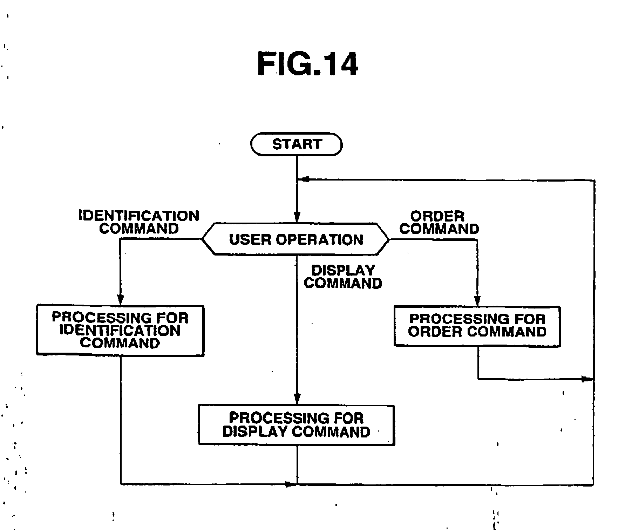

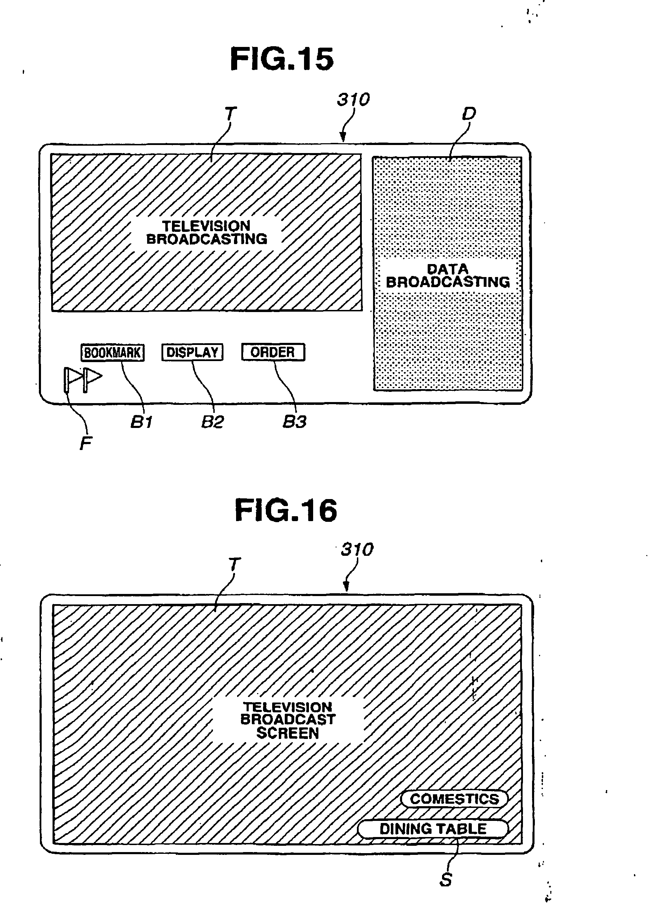

Next, when the broadcast start time for the main programme has been reached, the reception terminal device receives the video and audio stream and plays back (broadcasts) the main programme (STEP 1304, 1305). If necessary, the user may perform a prescribed operation as illustrated in Fig. 14, either during broadcast of the main programme or after broadcasting has terminated (STEP 1206, 1208). For example, as illustrated in Fig. 15, if, whilst the user is watching the television broadcast screen region T, the video images projected on the screen region T display an object image which is of interest to the user, such as a dinner set, item of clothing, household tool, or the like, then in order to supply an identification command for the display object to the reception terminal device, the user presses a prescribed control button on the remote controller, or a button icon B1 displayed on the screen. Upon receiving the object image identification command due to the controls performed by the user, the reception terminal device acquires the identification timing information at that time, and identifies the object image from the comparative information, on the basis of the command timing information. Thereupon, in order to inform the user that the object image has been identified, the reception terminal device displays a symbol F indicating that it has been found, on the screen. Moreover, if the user presses a prescribed control button of the remote controller or an icon button B2 displayed on the screen, in order to issue a display command at a desired timing, then the reception terminal device displays object image information for the identified object image on the data broadcast screen region D. In this case, if a plurality of object images are identified, then the respective object images may be displayed in a list, in such a manner that the user may select an object therefrom.

Moreover, Fig. 16 is a diagram illustrating a further example of a screen displayed on the monitor 310. As shown in the diagram, in this screen example, the name of the identified object image is displayed in an superimposed fashion over the television broadcasting screen region T, as a symbol for indicating that the object has been identified, Furthermore, when object image information is displayed, it may be displayed, similarly, in a superimposed fashion over the main programme.

As described above, according to the present embodiment, if a product, or the like, (object image) which is of interest to the user is projected during broadcast of a television shopping programme, for , example, then since the user is able to identify that product, or the like, by operating the remote controller, he or she is able to confirm the detailed information (object image information) for that product, or the like, at a convenient time and not necessarily during the broadcast time for that programme. In other words, if the user presses a manual button on the remote controller whilst a product, or the like, that he or she is interested in is being shown on the television screen, in exactly the same manner as inserting a "bookmark" on the relevant screen, then a mark is attached to the product, or the like, shown on that screen, in such a manner that detailed information for the product, or the like, thus marked can be called up onto the screen at a time that is convenient for the user, for instance, after the end of the broadcast. Consequently, it is possible to avoid problematic situations of the kind where the programme being broadcast proceeds and is missed by the user, whilst the user is confirming the detailed information for the product, or the like. Moreover, since it is devised that the object image information is not displayed within the main programme screen, it becomes easier to balance the interests of sponsors, without interfering with the viewing of the programme.

Furthermore, according to the present embodiment, rather than the broadcast programme contents being limited to a television shopping channel, or the like, the viewer is able to perform shopping by means of images from drama programmes, films, and so on. Thereby, the broadcast operator is able to provide a new television shopping service which combines main programme and associated data broadcasting.

Furthermore, if profiles of performers, or the like, are previously stored as object image information, for example, then it is possible to check up the profile of a person appearing in a drama programme, film, or the like, after the programme broadcast has ended, in such a manner that a new manner of utilising the television can be provided.

In the present embodiment, the normal play time NPT was used to acquire the command timing information according to the controls performed by the user, but the invention is not limited to this in particular.

For example, it is also possible to use the current time and date information as indicated by a TDT (Time and Date Table) of service information SI transmitted by either the video and audio stream or the data broadcasting stream. Moreover, it is also possible to use the standard timing information STC only. Furthermore, the absolute timing information may also be used, instead of using relative timing information from the broadcast start timing of the programme. For example, a signal received from a GPS (Global Positioning System) may be employed for this purpose.

Moreover, it may also be supposed that in actual television broadcasting, variations will occur in the broadcast timing for the main programme. In cases of this kind, besides using the normal play time NPT as described above, it is also possible to correct the standard timing information STC, by supplying correction information to the timing standard reference information PCR (or SCR). On the other hand, it is also possible to transmit new comparative information having amended contents.

### (Second embodiment)

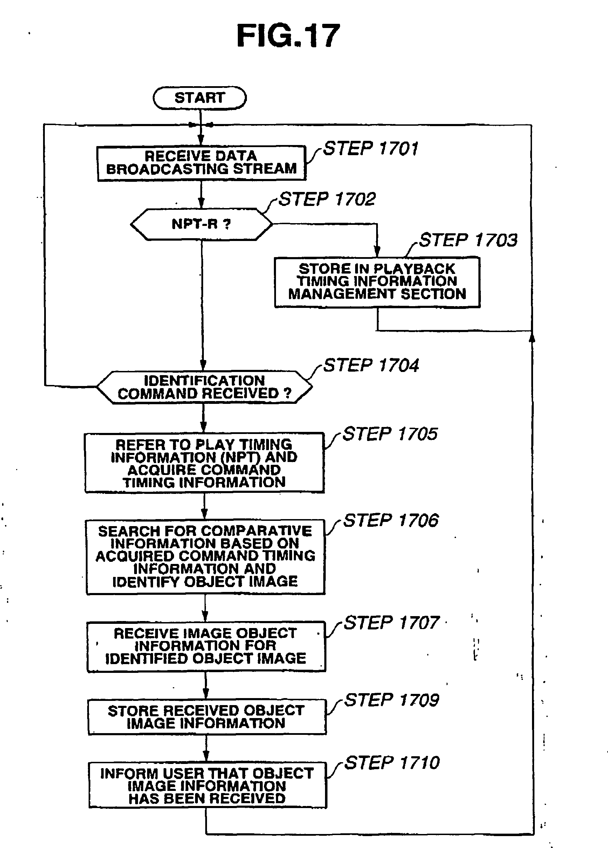

Fig. 17 is a diagram describing the operational processing performed by a reception terminal device relating to this embodiment. This embodiment is characterised in that, after there has been an object image identification command from the user, object image information for an identified object image is extracted and stored from amongst object image information transmitted by a carousel method. Thereby, it is only necessary to store the required object image information, thereby making it possible to save the storage region. Moreover, similarly to the embodiment described above, it is supposed that the comparative information is transmitted and stored prior to main programme broadcasting.

In this diagram, the reception terminal device receives a data broadcasting stream (STEP 1701), and if this is normal play time reference information NPT-R, it is stored in the play timing information management section 52 (STEP 1702, 1703). If the reception terminal device receives an identification command from the operating section 303 during broadcasting of the main programme, the reception terminal device refers to the play timing information (NP) and acquires command timing information (STEP 1704, STEP 1705). The reception terminal device searches for the comparative information on the basis of the acquired command timing information, identifies the object image (STEP 1706), and receives the object image information for the identified object image from the object image information transmitted by a carousel method (STEP 1707).

Upon receiving the object image information for the identified object image, the reception terminal device stores this object image information (STEP 1708), and displays a symbol informing the user that said information has been received, on the screen of the monitor 310 (STEP 1709).

As described above, according to the present embodiment, it is possible to display similar merits to those of the first embodiment described above, in addition to which, since object image information for an identified object image is extracted after identification from a stream transmitted by a carousel method, only the required object image information needs to be stored, thereby making it possible to spare the memory of the reception terminal device.

### (Third embodiment)

The reception terminal device relating to the present embodiment is characterised in that, when a object image identification command is made, screen position information is input, and the object image is identified by means of the command timing information and the input position information. Therefore, the comparative information relating to the present embodiment is constituted by display timing information indicating the timing at which the object image is displayed, and position information indicating the position on the screen at which that object image is depicted.

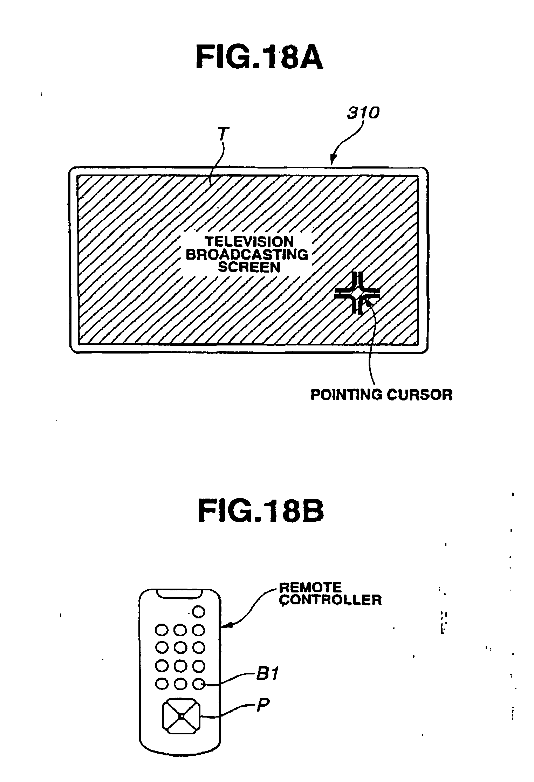

Fig. 17 is a diagram for describing an operational example using a reception terminal device relating to the present embodiment. As shown in Fig. 18(a), the user controls the pointing cursor displayed on the screen of the monitor 310 by means of up/down and left/right cursor buttons of the remote controller 24 shown in Fig. 18(b). The user then presses the button B1 for instructing identification whilst the object image depicted on the screen is being indicated by the pointing cursor. The reception terminal device acquires the command timing information when the button B1 is pressed, and also acquires the positional information indicated by the pointing cursor, and on the basis of this information, it searches for the comparative information and hence identifies the object image.

As described above, according to the present embodiment, when identifying an object image from the comparative information after receiving an identification command from the user, then even in cases where there are a plurality of object images which, may potentially be identified, the identification can be concentrated further according to the positional information, and hence it is not necessary for object images which are not required by the user to be identified.

### (Fourth embodiment)

This embodiment is characterised in that, rather than identifying the object image information stored in the data broadcasting data storing section 309 in accordance with an identification command, the unwanted object image information is deleted from the data broadcasting data storing section 309. Data indicating the validity time limit of an object image information file (hereinafter, called, "validity time limit data") is used to describe whether or not object image information is unwanted, and this data is transmitted as part of the data broadcasting stream .

In other words, prior to main programme broadcasting or during main programme broadcasting, the system on the broadcast operator side transmits the validity time limit data along with the object image information, as part of the data broadcasting stream . When the reception terminal device receives control data for performing a check of unwanted files transmitted in the data broadcasting stream , the data broadcast control section 312 refers to the validity time limit data stored in the data broadcasting data storing section 309 and deletes the object image information files which have passed their validity time limit.

It is also possible to adopt a composition wherein the a forementioned validity time limit data is contained in the comparative information illustrated in Fig. 6.

### (Other embodiments)

In the aforementioned embodiments, it was supposed that comparative information and object image information were transmitted to the reception terminal by a data broadcasting stream , but the invention is not limited to this in particular. For example, it is also possible to adopt a composition whereby a storage medium, such as a CD-ROM, DVD-ROM, or the like, storing comparative information and object image information as described above is distributed to users, in such a manner that the reception terminal device can read in the information from the storage medium. Moreover, it is also possible to obtain this information by means of the Internet. Furthermore, it is also possible to adopt a composition, whereby the command timing information identified by the reception terminal device is stored, and when the user has connected to a server of the service provider, an object image is identified from the comparative information stored in the server, on the basis of the stored command timing information, the corresponding object image information then being obtained from the server.

Furthermore, in the aforementioned embodiments, it is supposed that the reception terminal device connects to the server of a service provider by means of a telephone circuit or the Internet, but the invention is not limited to this in particular. For example, it may be connected to the server of a service provider by means of the computer of a cable television station, by making use of the upstream line of a bi-directional cable television system.

Furthermore, in the aforementioned embodiments, it is assumed that a video and audio stream transmitted in real time by a broadcaster is being reproduced, but it is also possible for the contents of the main programme to be recorded on a storage device, such as a VTR, or the like, whereby the user can make identification commands for object images in a similar manner, whilst the recorded contents are being played back. In this case, the object image information, or the like, may be recorded together with the video and audio stream, or it may be accumulated inside the reception terminal device.

Furthermore, in the aforementioned embodiments, it was supposed that the comparative information is transmitted prior to the start of main programme broadcasting, but the invention is not limited to this in particular, and it is also possible to transmit the comparative information in parallel with the main programme broadcast, or to transmit it in a repeated fashion.

Incidentally, in the present specification, the term 'means' does not simply refer to physical means, but also includes cases where the functions provided by said means are achieved by software. Furthermore, it is also possible for the functions provided by a single means to be achieved by two or more physical means, or for the functions of two or more means to be achieved by a single physical means.

## Claims

1. A method for using a reception terminal device, comprising:
storing object image information for object images to be displayed on a screen according to a transmission stream, and display timing information at which said object images are to be displayed, in a mutually corresponding fashion;
when an object image is displayed on the screen on a basis of said transmission stream being received, and when a first command is received from a user,
acquiring command timing information at the time that said first command is received on a basis of prescribed timing management information which is contained in said transmission stream;
identifying said stored display timing information corresponding to said acquired command timing information and identifying said stored object image corresponding to said identified display timing information; and
displaying object image information for said identified object image on said screen when a second command has been received from the user.

2. The method according to claim 1, wherein said timing management information indicates a relative position from a prescribed position on the time axis of said transmission stream.

3. The method according to claim 1 or 2, wherein said reception terminal device displays a prescribed mark on said screen, when said displayed object image has been identified.

4. The method according to any one of claims 1 to 3, wherein said reception terminal device displays an input screen for inputting order details for ordering said identified object image.

5. The method according to claim 4, wherein said reception terminal device issues order details input to said input screen, via a communications line.

6. The method according to any one of claims 1 to 5, wherein said reception terminal device displays said identified plurality of object images respectively in a list on said screen, in cases where a plurality of said displayed object images have been identified.

7. The method according to any one of claims 1 to 6, wherein said reception terminal device deletes said stored object image information in accordance with control data for deleting said object image information.

8. A method for using a reception terminal device comprising:
storing identification information for object images to be displayed on a screen on the basis of a video/audio broadcasting stream which is contained in a transmission stream being received, and display timing information at which said object images are to be displayed, in a mutually corresponding fashion;
when an object image is displayed on the screen on the basis of said video/audio broadcasting stream contained in said received transmission stream, and when a first command is received from a user, acquiring command timing information for the time at which said first command is received on a basis of timing management information contained in said transmission stream;
identifying said displayed object image based on said acquired command timing information and said stored display timing information;
after the object image has been identified, extracting object image information for said identified object image from the data broadcasting stream which is contained in the received transmission stream; and
displaying said extracted object image information on said screen, if a second command is received from the user.

9. The method according to claim 8, in cases where said object image information is transmitted in a repeated fashion at prescribed intervals by said data broadcasting stream, wherein said reception terminal device extracts object image information for said identified object image from the object image information group transmitted in repeated fashion at prescribed intervals by said data broadcasting stream.

10. A method for using a reception terminal device comprising:
storing object image information for object images to be displayed on a screen according to a transmission stream, display timing information at which said object images are to be displayed, and screen position information at which said object images are to be displayed, in a mutually corresponding fashion;
when positional information is acquired according to a position command operation performed by the user and when a first command has been received from the user, after an object image is displayed on the screen on the basis of the received transmission stream, acquiring command timing information for the time at which said first command has been received, on the basis of prescribed timing management information contained in said received transmission stream;
identifying said displayed object image on the basis of said acquired command timing information, said positional information, and said stored display timing information; and
displaying object image information for said identified object image on said screen when a second command is received from the user.

11. A reception terminal device comprising:
receiving means for receiving a transmission stream;
storing means for storing object image information for object images to be displayed on a screen according to said transmission stream, and display timing information at which said object images are to be displayed, in a mutually corresponding fashion;
timing information acquiring means for acquiring command timing information for the time that said first command is received on a basis of timing management information, when object images are displayed on the screen on a basis of timing management information and a first independent stream contained in said received transmission stream, and when a first command according to operations by a user has been received;
identifying means for identifying a displayed object image on the basis of said command timing information acquired by said timing information acquiring means and the display timing information stored in said storing means; and
display control means for displaying, on said screen, object image information for the object image identified by said identifying means, when a second command from the user has been received.

12. The reception television device according to claim 11 further comprising:
generating means for generating video signals by decoding a first independent stream contained in the transmission stream received by said receiving means;
first display control means for displaying video based on said video signals generated by said generating means, on a screen, in accordance with timing management information contained in the transmission stream received by said receiving means;
first operation receiving means for receiving a first command according to operations performed by a user;
said timing information acquiring means acquiring command timing information for the time at which said first command is received by said first operating receiving means, on the basis of said timing management information;
second operation receiving means for receiving a second command from the user; and
second display control means for displaying object image information for the object image identified by said identifying means, in accordance with a second command received by said second operating receiving means.

13. A computer program product loadable in the memory of a computer, comprising
software code portions for performing the steps of any of method claims 1 - 10, when said product is run on a computer.

14. A computer-readable recording medium having recorded thereon a computer program according to program product claim 13.

## Patentansprüche

1. Verfahren zum Einsetzen einer Empfangs-Endgerätvorrichtung, das umfasst:
Speichern von Objektbild-Informationen für Objektbilder, die auf einem Bildschirm entsprechend einem Sende-Strom angezeigt werden sollen, und von Informationen über die Anzeigezeit, zu der die Objektbilder angezeigt werden sollen, in Entsprechung zueinander,
wobei, wenn ein Objektbild auf dem Bildschirm auf Basis des empfangenen Sendestroms angezeigt wird, und wenn ein erster Befehl von einem Benutzer empfangen wird,
Erfassen von Befehls-Zeitinformationen zu der Zeit, zu der der erste Befehl empfangen wird, auf Basis vorgeschriebener Zeit-Verwaltungsinformationen, die in dem Sendestrom enthalten sind;
Identifizieren der gespeicherten Anzeige-Zeitinformationen, die den erfassten Befehls-Zeitinformationen entsprechen, und Identifizieren des gespeicherten Objektbildes, das den identifizierten Anzeige-Zeitinformationen entspricht; und
Anzeigen von Objektbild-Informationen für das identifizierte Objektbild auf dem Bildschirm, wenn ein zweiter Befehl von dem Benutzer empfangen worden ist.

2. Verfahren nach Anspruch 1, wobei die Zeitverwaltungsinformationen eine relative Position in Bezug auf eine vorgeschriebene Position auf der Zeitachse des Sendestroms anzeigen.

3. Verfahren nach Anspruch 1 oder 2, wobei die Empfangs-Endgerätvorrichtung ein vorgeschriebenes Zeichen auf dem Bildschirm anzeigt, wenn das angezeigte Objektbild identifiziert worden ist.

4. Verfahren nach einem der Ansprüche 1 bis 3, wobei die Empfangs-Endgerätvorrichtung einen Eingabebildschirm zum Eingeben von Bestell-Details zum Bestellen des identifizierten Objektbildes anzeigt.

5. Verfahren nach Anspruch 4, wobei die Empfangs-Endgerätvorrichtung Bestell-Details, die über den Eingabebildschirm eingegeben werden, über eine Kommunikationsleitung ausgibt.

6. Verfahren nach einem der Ansprüche 1 bis 5, wobei die Empfangs-Endgerätvorrichtung die identifizierte Vielzahl von Objektbildem jeweils in einer Liste auf dem Bildschirm anzeigt, wenn eine Vielzahl der angezeigten Objektbilder identifiziert worden sind.

7. Verfahren nach einem der Ansprüche 1 bis 6, wobei die Empfangs-Endgerätvorrichtung die gespeicherten Objektbild-Informationen entsprechend Steuerdaten zum Löschen der Objektbild-Informationen löscht.

8. Verfahren zum Verwenden einer Empfangs-Endgerätvorrichtung, das umfasst:
Speichern von Identifizierungsinformationen für Objektbilder, die auf einem Bildschirm auf Basis eines Video-/Audio-Rundsendestroms angezeigt werden sollen, der in einem empfangenen Sendestrom enthalten ist, und von Informationen über eine Anzeigezeit, zu der die Objektbilder angezeigt werden sollen, in gegenseitiger Entsprechung zueinander;
wobei, wenn ein Objektbild auf dem Bildschirm auf Basis des Video-/Audio-Rundsendestroms angezeigt wird, der in dem empfangenen Sendestrom enthalten ist, und wenn ein erster Befehl von einem Benutzer empfangen wird, Befehls-Zeitinformationen für die Zeit, zu der der erste Befehl empfangen wird, auf Basis von Zeitverwaltungsinformationen empfangen werden, die in dem Sendestrom enthalten sind;
Identifizieren des angezeigten Objektbildes auf Basis der erfassten Befehls-Zeitinformationen und der gespeicherten Informationen über eine Anzeigezeit;
nachdem das Objektbild identifiziert worden ist, Extrahieren von Objektbild-Informationen für das identifizierte Objektbild aus dem Daten-Rundsendestrom, der in dem empfangenen Sendestrom enthalten ist; und
Anzeigen der extrahierten Objektbild-Informationen auf dem Bildschirm, wenn ein zweiter Befehl von dem Benutzer empfangen wird.

9. Verfahren nach Anspruch 8, wobei, wenn die Objektbild-Informationen wiederholt in vorgeschriebenen Intervallen mittels des Daten-Rundsendestroms gesendet werden, das Empfangs-Endgerät Objektbild-Informationen für das identifizierte Objektbild aus der Gruppe von Objektbild-Informationen extrahiert, die in vorgegebenen Intervallen wiederholt durch den Daten-Rundsendestrom gesendet werden.

10. Verfahren zum Verwenden einer Empfangs-Endgerätvorrichtung, das umfasst:
Speichern von Objektbild-Informationen für Objektbilder, die auf einem Bildschirm entsprechend einem Sendestrom angezeigt werden sollen, von Informationen über eine Anzeigezeit zu der die Objektbilder angezeigt werden sollen, und von Informationen über eine Bildschirmposition, an der die Objektbilder angezeigt werden sollen, in Entsprechung zueinander;
wenn Positionsinformationen entsprechend einem Positionsbefehlvorgang erfasst werden, der von dem Benutzer durchgeführt wird, und wenn ein erster Befehl von dem Benutzer empfangen worden ist, nachdem ein Objektbild auf dem Bildschirm auf Basis des empfangenen Sendestroms angezeigt worden ist, Erfassen von Befehls-Zeitinformationen für die Zeit, zu der der erste Befehl empfangen worden ist, auf Basis vorgeschriebener Zeitverwaltungsinformationen, die in dem empfangenen Sendestrom enthalten sind;
Identifizieren des angezeigten Objektbildes auf Basis der erfassten Befehls-Zeitinformationen, der Positionsinformationen und der gespeicherten Anzeige-Zeitinformationen; und
Anzeigen von Objektbild-Informationen für das identifizierte Objektbild auf dem Bildschirm, wenn ein zweiter Befehl von dem Benutzer empfangen wird.

11. Empfangs-Endgerätvorrichtung, die umfasst:
eine Empfangseinrichtung zum Empfangen eines Sendestroms:
eine Speichereinrichtung zum Speichern von Objektbild-Informationen für Objektbilder, die auf einem Bildschirm entsprechend dem Sende-Strom angezeigt werden sollen, und Informationen über eine Anzeigezeit zu der die Objektbilder angezeigt werden sollen, in Entsprechung zueinander;
eine Zeitinformations-Erfassungseinrichtung zum Erfassen von Befehls-Zeitinformationen für die Zeit, zu der der erste Befehl empfangen wird, auf Basis von Zeitverwaltungsinformationen, wenn Objektbilder auf dem Bildschirm auf Basis von Zeitverwaltungsinformationen und eines ersten unabhängigen Stroms angezeigt werden, der in dem empfangenen Sendestrom enthalten ist, und wenn ein erster Befehl entsprechend Betätigungen durch einen Benutzer empfangen worden ist;
eine Identifizierungseinrichtung zum Identifizieren eines angezeigten Objektbildes auf Basis der durch die Zeitinformations-Erfassungseinrichtung erfassten Befehls-Zeitinformationen und der in der Speichereinrichtung gespeicherten Informationen über eine Anzeigezeit; und
eine Display-Steuereinrichtung zum Anzeigen von Objektbild-Informationen für das durch die Identifizierungseinrichtung identifizierte Objektbild auf dem Bildschirm, wenn ein zweiter Befehl von dem Benutzer empfangen worden ist.

12. Empfangs-Femsehvorrichtung nach Anspruch 11, die des Weiteren umfasst:
eine Erzeugungseinrichtung zum Erzeugen von Videosignalen durch Dekodieren eines ersten unabhängigen Stroms, der in dem durch die Empfangseinrichtung empfangenen Sendestrom enthalten ist;
eine erste Anzeige-Steuereinrichtung zum Anzeigen von Video auf Basis der durch die Erzeugungseinrichtung erzeugten Video-Signale auf einem Bildschirm entsprechend Zeitverwaltungsinformationen, die in dem durch die Empfangseinrichtung empfangenen Sendestrom enthalten sind;
eine erste Betätigungs-Empfangseinrichtung zum Empfangen eines ersten Befehls entsprechend Betätigungen, die von einem Benutzer durchgerührt werden;
wobei die Zeitinformations-Erfassungseinrichtung Befehls-Zeitinformabonen für die Zeit, zu der der erste Befehl durch die erste Betätigungs-Empfangseinrichtung empfangen wird, auf Basis der Zeitverwaltungsinformationen erfasst;
eine zweite Betätigungs-Empfangseinrichtung zum Empfangen eines zweiten Befehls von dem Benutzer; und
eine zweite Anzeige-Steuereinrichtung zum Anzeigen von Objektbild-Informationen für das durch die Identifizierungseinrichtung identifizierte Objektbild entsprechend einem durch die zweite Betätigungs-Empfangseinrichtung empfangenen zweiten Befehls.

13. Computerprogrammerzeugnis, das in den Speicher eines Computers geladen werden kann, wobei es umfasst:
Software-Codeabschnitte zum Durchführen der Schritte nach einem der Verfahrensansprüche 1-10, wenn das Erzeugnis auf einem Computer ausgeführt wird.

14. Computerlesbares Aufzeichnungsmedium, auf dem ein Computerprogramm nach dem Programmerzeugnis Anspruch 13 aufgezeichnet ist.

## Revendications

1. Procédé pour utiliser un dispositif terminal de réception, comprenant :
le stockage d'informations d'image d'objet pour des images d'objet devant être affichées sur un écran selon un flux de transmission, et d'informations de cadencement d'affichage auquel lesdites images d'objet doivent être affichées, de façon mutuellement correspondante ;
lorsqu'une image d'objet est affichée sur l'écran sur une base dudit flux de transmission qui est reçu, et lorsqu'un premier ordre est reçu en provenance d'un utilisateur,
acquérir des informations de cadencement d'ordre au moment auquel ledit premier ordre est reçu sur une base d'informations de gestion de cadencement prescrites qui sont contenues dans ledit flux de transmission ;
identifier lesdites informations de cadencement d'affichage stockées correspondant auxdites informations de cadencement d'ordre acquises et identifier ladite image d'objet stockée correspondant auxdites informations de cadencement d'affichage identifiées ; et
afficher des informations d'image d'objet pour ladite image d'objet identifiée sur ledit écran lorsqu'un second ordre a été reçu en provenance de l'utilisateur.

2. Procédé selon la revendication 1, dans lequel lesdites informations de gestion de cadencement indiquent une position relative par rapport à une position prescrite sur l'axe temporel dudit flux de transmission.

3. Procédé selon la revendication 1 ou 2, dans lequel ledit dispositif terminal de réception affiche une marque prescrite sur ledit écran, lorsque ladite image d'objet affichée a été identifiée.

4. Procédé selon l'une quelconque des revendications 1 à 3, dans lequel ledit dispositif terminal de réception affiche un écran d'entrée pour entrer des détails de commande pour commander ladite image d'objet identifiée.

5. Procédé selon la revendication 4, dans lequel ledit dispositif terminal de réception émet des détails de commande entrés dans ledit écran d'entrée, via une ligne de communications.

6. Procédé selon l'une quelconque des revendications 1 à 5, dans lequel ledit dispositif terminal de réception affiche ladite pluralité d'images d'objet identifiée respectivement dans une liste sur ledit écran, dans le cas où une pluralité desdites images d'objet affichées ont été identifiées.

7. Procédé selon l'une quelconque des revendications 1 à 6, dans lequel ledit dispositif terminal de réception supprime lesdites informations d'image d'objet stockées conformément à des données de commande pour supprimer lesdites informations d'image d'objet.

8. Procédé pour utiliser un dispositif terminal de réception comprenant :
le stockage d'informations d'identification pour des images d'objet devant être affichées sur un écran sur la base d'un flux de diffusion vidéo/audio qui est contenu dans un flux de transmission qui est reçu, et d'informations de cadencement d'affichage auquel lesdites images d'objet doivent être affichées, de façon mutuellement correspondante ;
lorsqu'une image d'objet est affichée sur l'écran sur la base dudit flux de diffusion vidéo/audio contenu dans ledit flux de transmission reçu, et lorsqu'un premier ordre est reçu en provenance d'un utilisateur, acquérir des informations de cadencement d'ordre pour le moment auquel ledit premier ordre est reçu sur une base d'informations de gestion de cadencement contenues dans ledit flux de transmission ;
identifier ladite image d'objet affichée sur la base desdites informations de cadencement d'ordre acquises et desdites informations de cadencement d'affichage stockées ;
après que l'image d'objet a été identifiée, extraire des informations d'image d'objet pour ladite image d'objet identifiée du flux de diffusion de données qui est contenu dans le flux de transmission reçu ; et
afficher lesdites informations d'image d'objet extraites sur ledit écran, si un second ordre est reçu en provenance de l'utilisateur.

9. Procédé selon la revendication 8, dans le cas où lesdites informations d'image d'objet sont transmises de façon répétée à des intervalles prescrits par ledit flux de diffusion de données, dans lequel ledit dispositif terminal de réception extrait des informations d'image d'objet pour ladite image d'objet identifiée du groupe d'informations d'image d'objet transmis de façon répétée à des intervalles prescrits par ledit flux de diffusion de données.

10. Procédé pour utiliser un dispositif terminal de réception comprenant :
le stockage d'informations d'image d'objet pour des images d'objet devant être affichées sur un écran selon un flux de transmission, d'informations de cadencement d'affichage auquel lesdites images d'objet doivent être affichées, et d'informations de position d'écran à laquelle lesdites images d'objet doivent être affichées, de façon mutuellement correspondante ;
lorsque des informations positionnelles sont acquises selon une opération d'ordre de position effectuée par l'utilisateur et lorsqu'un premier ordre a été reçu en provenance de l'utilisateur, après qu'une image d'objet est affichée sur l'écran sur la base du flux de transmission reçu, acquérir des informations de cadencement d'ordre pour le moment auquel ledit premier ordre a été reçu, sur la base d'informations de gestion de cadencement prescrites contenues dans ledit flux de transmission reçu ;
identifier ladite image d'objet affichée sur la base desdites informations de cadencement d'ordre acquises, desdites informations positionnelles, et desdites informations de cadencement d'affichage stockées ; et
afficher des informations d'image d'objet pour ladite image d'objet identifiée sur ledit écran lorsqu'un second ordre est reçu en provenance de l'utilisateur.

11. Dispositif terminal de réception comprenant :
des moyens de réception pour recevoir un flux de transmission ;
des moyens de stockage pour stocker des informations d'image d'objet pour des images d'objet devant être affichées sur un écran selon ledit flux de transmission, et des informations de cadencement d'affichage auquel lesdites images d'objet doivent être affichées, de façon mutuellement correspondante ;
des moyens d'acquisition d'informations de cadencement pour acquérir des informations de cadencement d'ordre pour le moment auquel ledit premier ordre est reçu sur une base d'informations de gestion de cadencement, lorsque des images d'objet sont affichées sur l'écran sur une base d'informations de gestion de cadencement et d'un premier flux indépendant contenu dans ledit flux de transmission reçu, et lorsqu'un premier ordre selon des opérations par un utilisateur a été reçu ;
des moyens d'identification pour identifier une image d'objet affichée sur la base desdites informations de cadencement d'ordre acquises par lesdits moyens d'acquisition d'informations de cadencement et des informations de cadencement d'affichage stockées dans lesdits moyens de stockage ; et
des moyens de commande d'affichage pour afficher, sur ledit écran, des informations d'image d'objet pour l'image d'objet identifiée par lesdits moyens d'identification, lorsqu'un second ordre en provenance de l'utilisateur a été reçu.

12. Dispositif de télévision de réception selon la revendication 11 comprenant en outre :
des moyens de génération pour générer des signaux vidéo en décodant un premier flux indépendant contenu dans le flux de transmission reçu par lesdits moyens de réception ;
des premiers moyens de commande d'affichage pour afficher une vidéo sur la base desdits signaux vidéo générés par lesdits moyens de génération, sur un écran, conformément à des informations de gestion de cadencement contenues dans le flux de transmission reçu par lesdits moyens de réception ;
des premiers moyens de réception d'opération pour recevoir un premier ordre selon des opérations effectuées par un utilisateur ;
lesdits moyens d'acquisition d'informations de cadencement acquérant des informations de cadencement d'ordre pour le moment auquel ledit premier ordre est reçu par lesdits premiers moyens de réception d'opération, sur la base desdites informations de gestion de cadencement ;
des seconds moyens de réception d'opération pour recevoir un second ordre en provenance de l'utilisateur ; et
des seconds moyens de commande d'affichage pour afficher des informations d'image d'objet pour l'image d'objet identifiée par lesdits moyens d'identification, conformément à un second ordre reçu par lesdits seconds moyens de réception d'opération.

13. Produit de programme informatique chargeable dans la mémoire d'un ordinateur, comprenant
des parties de code logiciel pour effectuer les étapes du procédé de l'une quelconque des revendications 1 à 10, lorsque ledit produit est exécuté sur un ordinateur.

14. Support d'enregistrement lisible par ordinateur ayant enregistré dessus un programme informatique selon le produit de programme de la revendication 13.
